# EUROPÄISCHE PATENTSCHRIFT

(11) **EP 2 091 780 B1**
(45) Veröffentlichungstag und Bekanntmachung des Hinweises auf die Patenterteilung: **14.12.2011**
(21) Anmeldenummer: 07819364.6
(22) Anmeldetag: 26.10.2007
(51) Int. Cl.: B60N 2/58, B60N 2/68

(54) **RÜCKENLEHNE MIT KOPFSTÜTZHÜLSE ZUR ANBRINGUNG EINES BAUTEILS**
BACKREST WITH HEADREST SLEEVE FOR ATTACHING A COMPONENT
DOSSIER AVEC MANCHON D'APPUIE-TÊTE POUR L'INSTALLATION D'UN ÉLÉMENT

(30) Priorität: 07.11.2006 DE 102006052703
(43) Veröffentlichungstag der Anmeldung: 26.08.2009
(73) Patentinhaber: Johnson Controls GmbH, 51399 Burscheid (DE)
(72) Erfinder: PEHAR, Dario, 51379 Leverkusen (DE); HAUBRICH, Joerg, 51399 Burscheid (DE)
(74) Vertreter: Schwöbel, Thilo K.
(86) Internationale Anmeldenummer: PCT/EP2007/009319
(87) Internationale Veröffentlichungsnummer: WO 2008/055600

(56) Entgegenhaltungen:
- DE-A1-102004 038 707
- FR-A- 2 837 151
- US-A1- 2005 269 856

## Beschreibung

Die Erfindung betrifft ein Verfahren zur Herstellung einer Rückenlehne gemäß dem Oberbegriff des Anspruchs 1.

Solche Vorrichtungen und Verfahren sind allgemein bekannt.
Die Druckschrift FR 2 837 151 beschreibt beispielsweise eine Rückenlehne für ein Fahrzeug mit zwei Röhren, über die ein Verstärkungsbauteil für die Rückenlehne angebracht wird. Nachteilig bei dieser Rückenlehne ist jedoch der komplizierte Aufbau der Rückenlehne und der hohe Montageaufwand, wenn ein zusätzliches Bauteil an der Rückenlehne befestigt werden soll.

Es war die Aufgabe der vorliegenden Erfindung ein Verfahren zur Herstellung der Rückenlehne anzugeben, welches die Nachteile des aus dem Stand der Technik bekanten Verfahrens nicht aufweist und trotzdem unkompliziert herzustellen ist und wenig Baustelle aufweist.

Der Gegenstand der vorliegenden Erfindung ist ein Verfahren zur Herstellung einer Rückenlehne mit Kopfstützenbefestigung. Bei dem erfindungsgemäßen Verfahren wird an einem Rückenblech ein Träger befestigt, wobei an dem Träger mindestens eine Kopfstützhülse befestigt ist. Ober den Träger wird ein Schaummaterial gelegt, beispielsweise Schaumstoff. Die Dicke des Schaummaterials ist dabei so gewählt, dass der darunter liegende Träger für einen Insassen, der sich an der Rückenlehne anlehnt, im Wesentlichen nicht mehr spürbar ist. Denkbar ist auch, dass das Schaummaterial nicht nur über den Träger, sondern auch auf das Rückenblech gelegt wird. In einem nächsten Verfahrensschritt wird über dem Träger ein Gewebe befestigt, so dass das Schaummaterial nicht mehr für einen Insassen sichtbar ist. Das Gewebe, oder auch Bezug genannt, kann sowohl über dem Träger wie auch über das Rückenblech gespannt werden. Zur Befestigung des Bauteils weist das Gewebe im Bereich der Kopfstützhülse mindestens eine Aussparung auf. Die Aussparung ist entweder bereits bei der Fertigung berücksichtigt worden oder kann nachträglich in das Gewebe eingebracht werden, beispielsweise durch Trimmen des Gewebes. Das Schaummaterial ist im Bereich der Kopfstützhülse nach oben drückbar, so dass auch nach dem Auflegen des Schaummaterials ein Zugang zu der Kopfstützhülse ermöglicht wird. Durch die Aussparungen des Gewebes wird die Einführhülse des Bauteils von unten über die Kopfstützhülse gezogen. Dafür wird das Schaummaterial zu Seite gedrückt. Anschließend wird das Bauteil mit seinem zweiten Ende an dem Rückenblech und/oder mit dem Träger verbunden. Hierfür weist das Gewebe in einem unteren Bereich weitere Aussparungen auf, durch die eine Verbindung zwischen Bauteils und Rückenblech oder Träger möglich wird.

Bevorzugt befindet sich das Bauteil über dem Gewebe. Das Schaummaterial kann sich dabei nur am Rand des Bauteils befinden oder auch unter dem Bauteil angeordnet sein. Denkbar wäre jedoch auch, dass sich das Bauteil unterhalb des Gewebes befindet. In diesem Fall wäre das Bauteil bei einer Gebrauchsstellung der Armlehne nicht sichtbar. Auch in diesem Fall kann sich das Schaummaterial nur am Rand des Bauteils befinden oder auch unterhalt des Bauteils vorliegen.

Die Erfindung wird nachfolgend anhand von Figuren erläutert. Die Figuren gelten für das erfindungsgemäße Verfahren zur Herstellung der Rückenlehne gleichermaßen und schränken den allgemeinen Erfindungsgedanken nicht ein.
- **Figur 1**: zeigt schematisch die Rückenlehne mit einer Kopfstützenbefestigung.
- **Figur 2**: stellt schematisch die Rückenlehne und ein Bauteil dar, wobei das Bauteil an zwei Kopfstützhülsen befestigt ist.
- **Figur 3**: zeigt schematisch das Bauteil und einen Träger, der mit einem Schaumaterial und einem Gewebe überzogen wurde.
- **Figur 4**: stellt schematisch die Rückenlehne mit dem Bauteil und einer Kopfstütze dar.

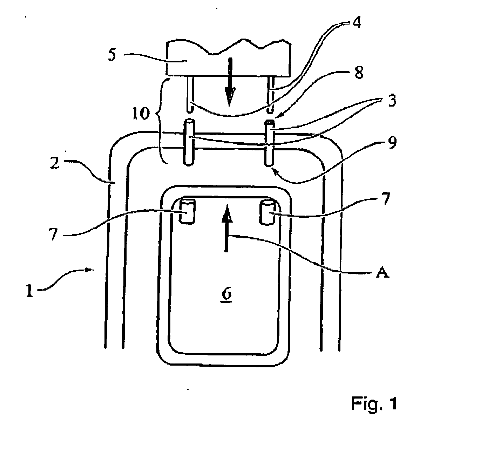

In der Figur 1 ist die Rückenlehne 1 dargestellt, wobei in der Darstellung auf eine Polsterung eines Trägers 2 mit einem Schaummaterial und einem Gewebe 12 verzichtet wurde. An einem Träger 2 sind, beispielsweise durch schweißen, zwei Kopfstützhülsen 3 angebracht. Eine Kopfstütze 6 weist zwei Haltestangen 4 auf, die zusammen mit den Kopfstützhülsen 3 eine Kopfstützenbefestigung 10 bilden. Zur Befestigung der Kopfstütze 5 an der Rückenlehne 1 werden die Haltestangen 4 in das obere Ende 8 der Kopfstützhülsen 3 eingeführt. Es entsteht dabei eine form - und/oder kraftschlüssige Verbindung. Ein Bauteil 6 weist im Ausführungsbeispiel zwei Einführhülsen 7 auf, die von unten, also in Richtung A, auf die unteren Enden 9 der Kopfstützhülsen 3 geschoben werden können. Die Einführhülsen 7 weisen hierfür einen Durchmesser auf, der größer ist als der Durchmesser der Kopfstützhülsen 3. Es versteht sich, dass eine form- und/oder kraftschlüssige Verbindung zwischen den Kopfstützhülsen 3 und den Einführhülsen 7 auch entsteht, wenn das untere Ende 9 der Kopfstützhülsen 3 in die Einführhülsen 7 gesteckt wird. Nachdem die Kopfstützhülsen 3 in die Einführhülsen 7 eingeführt sind, entsteht eine form - und/oder kraftschlüssige Verbindung zwischen Kopfstützhülsen 3 und Einführhülsen 7. Die Funktion der Kopfstütze 5 wird durch die Anbringung des Bauteils 6 an dem unteren Ende 9 der Kopfstützhülse 3 nicht beeinträchtigt. Eine zusätzliche Befestigung des Bauteils 6 bzw. der Einführhülsen 7 an den Kopfstützhülsen 3 ist nicht notwendig.

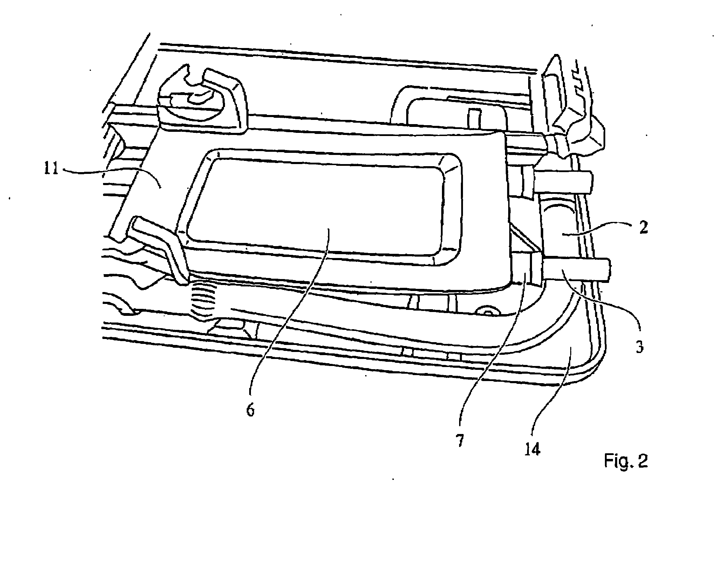

Die Figur 2 zeigt schematisch das Bauteil 6 in Verbindung mit den Kopfstützhülsen 3. Die Verbindung entsteht hierbei durch die Einführhülsen 7, die über die unteren Enden 9 der Kopfstützhülsen 3 gezogen wurden. Die Kopfstützhülsen 3 sind dabei an einem Träger 2 befestigt, der wiederum mit einem Rückenblech 14 verbunden ist. Das Bauteil 6 wird nach der Befestigung durch die Einführhülsen 7 mit einem zweiten Ende 11 mit dem Träger 2 und/oder mit dem Rückenblech 14 verbunden. Diese Verbindung kann beispielsweise eine Klippverbindung oder eine Hakenverbindung sein. Möglich ist jedoch auch, dass das Bauteil an dem Träger und/oder dem Rückenblech angeschraubt und/oder festgenietet wird. Zur besseren Parkstellung wurde in der Figur 2 kein Schaumträger oder Gewebe 12 mit in die Figur 2 eingezeichnet. Bevorzugt befindet sich jedoch das Bauteil 6 im Wesentlichen über dem Schaummaterial und dem Gewebe 12, wodurch das Bauteil 6 reversibel austauschbar ist. Im unteren Ende 11 des Bauteils 6 ist bevorzugt eine Armlehne an das Bauteil 6 anbringbar. Denkbar ist jedoch auch, dass die Armlehne an dem Träger 2 oder dem Rückenblech 14 befestigt ist und das Bauteil 6 lediglich als Blende bzw. als Sichtschutz dient, wenn die Armlehne in Gebrauchsstellung verschwenkt ist. Bevorzugt ist die Armlehne so angebracht, dass sie von einer Gebrauchsstellung in eine Nichtgebrauchsstellung und umgekehrt schwenkbar ist.

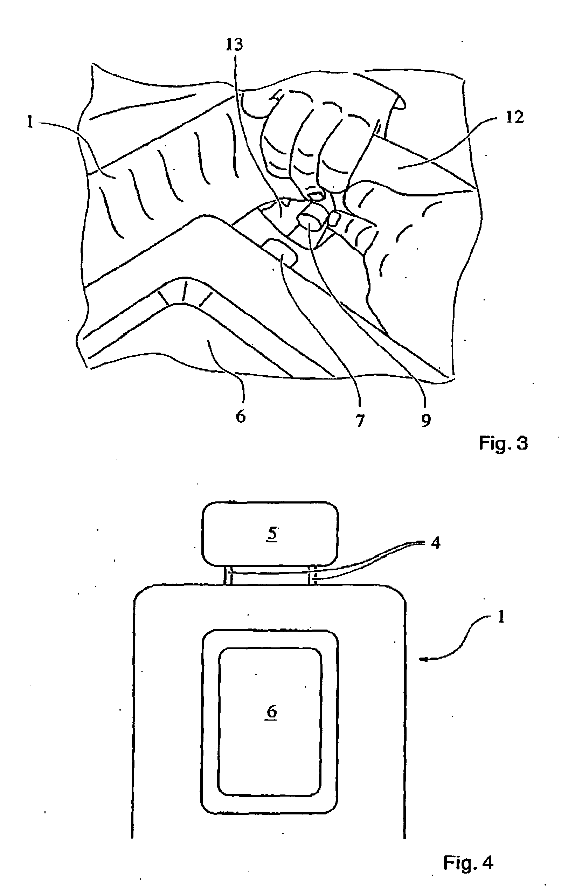

In der Figur 3 ist die Rückenlehne 1 mit Schaummaterial und Gewebe dargestellt. Das Schaummaterial befindet sich im Ausführungsbeispiel nur um den nicht sichtbaren Träger 2 und wird vollständig von dem Gewebe 12 verdeckt. Das Gewebe 12 ist dabei sowohl über dem Träger 2, als auch über das Rückenblech 14 gezogen. Zur Montage des Bauteils 6 an die Rückenlehne 1 weist das Gewebe 12 mindestens eine Aussparung 13 auf. Die Aussparung 13 ist entweder bereits bei der Fertigung berücksichtigt worden oder nachträglich durch Trimmen des Gewebes entstanden, Um die Einführhülse 7 über das untere Ende 9 der Kopfstützhülse ziehen zu können, muss das Gewebe 12 und das Schaummaterial so gedrückt werden, dass das untere Ende 9 der Kopfstützhülse 3 frei gelegt wird. Nachdem das untere Ende 9 der Kopfstützhülse 3 mit der Einführhülse 7 verbunden ist und das Gewebe 12 und das Schaummaterial nicht mehr gedrückt werden, ist die Verbindung zwischen den beiden Hülsen 3, 7 nicht mehr sichtbar. Es ist auch denkbar, dass sich das Schaummaterial so über dem unteren Ende 9 der Kopfstützhülse 3 befindet, dass auch eine Aussparung im Schaummaterial vorgenommen werden muss.

In der Figur 4 ist der Fahrzeugsitz mit Kopfstütze 5 und dem Bauteil 6 dargestellt. Die Verbindungen, mit denen das Bauteil 6 mit dem Träger 2 oder dem Rückenblech 14 und den Kopfstützhülsen 3 verbunden ist, sind dabei nicht sichtbar.

### Bezugszeichenliste

- 1: Rückenlehne
- 2: Träger
- 3: Kopfstützhülse
- 4: Haltestange
- 5: Kopfstütze
- 6: Bauteil / Blende
- 7: Einführhülse
- 8: oberes Ende (Kopfstützhülse)
- 9: unteres Ende (Kopfstützhülse)
- 10: Kopfstützenbefestigung
- 11: zweites Ende (Bauteil)
- 12: Gewebe
- 13: Aussparung (Gewebe)
- 14: Rückenblech
- A: Richtung

## Patentansprüche

1. Verfahren zur Herstellung einer Rückenlehne (1) mit einer Kopfstützenbefestigung (10), wobei an einem Rückenblech (14) ein Träger (2) befestigt wird und an dem Träger (2) mindestens eine Kopfstützhülse (3) befestigt wird, und um den Träger (2) ein Schaummaterial und ein Gewebe (12) gelegt wird und das Gewebe (12) mindestens eine Aussparung (13) aufweist und **dadurch gekennzeichnet, dass** eine Einführhülse (7) eines Bauteils (6) durch die Aussparungen (13) des Gewebes (12) von unten über das untere Ende (9) einer Kopfstützhülse (3) gezogen wird und anschließend das Bauteil (6) an einem zweiten Ende (11) an dem Rückenblech (14) und/oder dem Träger (2) befestigt wird.

## Claims

1. Method for producing a backrest (1) with a headrest fastening (10), wherein a support (2) is fastened to a back plate (14) and at least one headrest sleeve (3) is fastened to the support (2), and a foam material and a fabric (12) are placed around the support (2) and the fabric (12) has at least one cutout (13), **characterized in that** an insertion sleeve (7) of a component (6) is pulled from below through the cutouts (13) in the fabric (12) and over the lower end (9) of a headrest sleeve (3), and the component (6) is subsequently fastened at a second end (11) to the back plate (14) and/or to the support (2).

## Revendications

1. Procédé de fabrication d'un dossier (1) avec une fixation d'appuie-tête (10), un support (2) étant fixé sur une tôle de dossier (14) et au moins un manchon d'appuie-tête (3) étant fixé sur le support (2), et un matériau en mousse et un tissu (12) étant posés autour du support (2) et le tissu (12) présentant au moins un évidement (13), **caractérise en ce qu'**un manchon d'insertion (7) d'un composant (6) est tiré à travers les évidements (13) du tissu (12) par le dessous pardessus l'extrémité inférieure (9) d'un manchon d'appuie-tête (3) et ensuite le composant (6) est fixé à une deuxième extrémité (11) sur la tôle de dossier (14) et/ou sur le support (2).
